(19) Europäisches Patentamt

European Patent Office

Office européen des brevets

(11) **EP 2 255 873 B1**

(12) **FASCICULE DE BREVET EUROPEEN**

(45) Date de publication et mention
de la délivrance du brevet:
**24.06.2020 Bulletin 2020/26**

(21) Numéro de dépôt: **09290914.2**

(22) Date de dépôt: **07.12.2009**

(51) Int Cl.:
*B01J 21/02* *(2006.01)*   *B01J 23/882* *(2006.01)*
*B01J 23/883* *(2006.01)*   *B01J 27/051* *(2006.01)*
*B01J 27/19* *(2006.01)*   *B01J 37/02* *(2006.01)*
*B01J 35/10* *(2006.01)*   *C10G 49/12* *(2006.01)*

(54) **Catalyseurs d'hydrodémétallation et d'hydrodésulfuration et mise en oeuvre dans un procédé d'enchaînement en formulation unique**

Katalysatoren zur Hydrodemetallisierung und zur Hydrodesulfurierung, und Einsatz in einem Kettenverfahren mit einer einzigen Formulierung

hydrodemetallation catalysts and hydrodesulfurization catalysts and a process using said catalysts

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.12.2008 FR 0807269**

(43) Date de publication de la demande:
**01.12.2010 Bulletin 2010/48**

(73) Titulaire: **IFP Energies nouvelles**
**92500 Rueil-Malmaison (FR)**

(72) Inventeurs:
• **Guichard, Bertrand**
**38140 Rives (FR)**
• **Guillaume, Denis**
**39200 Vienne (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A- 0 565 205      EP-A- 1 775 019**
**EP-A1- 1 600 491     WO-A1-00/42119**
**WO-A1-02/48288       FR-A- 2 764 211**
**FR-A- 2 913 691      JP-B- 6 031 333**
**US-A1- 2005 155 909  US-A1- 2006 060 510**

**Description**

L'hydrotraitement des charges hydrocarbonées, telles que les coupes pétrolières soufrées, prend une importance de plus en plus grande dans la pratique du raffinage avec la nécessité croissante de réduire la quantité de soufre dans les coupes pétrolières et de convertir des fractions lourdes (dont le point d'ébullition est supérieur à 370°C) en fractions plus légères valorisables en tant que carburant. Il est en effet nécessaire, au vu des normes imposées par chaque pays pour les carburants commerciaux, de valoriser au mieux les bruts importés de plus en plus riches en fractions lourdes et en hétéroatomes et de plus en plus pauvre en hydrogène.

Deux types de procédé d'hydrotraitement permettant le traitement de charges lourdes telles que des résidus atmosphériques (RA) ou sous vide (RSV) existent :

- Les procédés en lit fixe
- Les procédés en lit bouillonnant

Il est connu de l'Homme du métier que l'hydrotraitement catalytique permet, par la mise en contact d'une charge hydrocarbonée avec un catalyseur dont les propriétés, en terme de métaux et de porosité, sont préalablement bien définies, de réduire sensiblement sa teneur en asphaltènes, métaux, soufre et autres impuretés tout en améliorant le rapport hydrogène sur carbone (H/C) et tout en la transformant plus ou moins partiellement en coupes plus légères.

Les procédés à lit fixe conduisent à des performances en raffinage élevées (production de coupes 370°C+ avec moins de 0,5% poids de soufre et contenant moins de 20 ppm de métaux) à partir de charge contenant jusqu'à 5% poids de soufre et jusqu'à 100 à 150 ppm de métaux Ni+V. Les différents effluents ainsi obtenus peuvent servir de bases pour la production de fiouls de bonne qualité, de gazole et d'essence, ou de charges pour d'autres unités telles que le craquage catalytique ("Fluid Catalytic Cracking"). Au-delà de cette teneur en métaux, il est connu que les premiers lits catalytiques peuvent se désactiver rapidement en raison de l'important dépôt de métaux qui se produit. Pour compenser cette désactivation, la température est alors augmentée. Néanmoins, cette augmentation de la température favorise le dépôt de coke accélérant les processus de colmatage intragranulaire (bouchage de la porosité du catalyseur) et extra granulaire (bouchage du lit catalytique). Au-delà de telles teneurs en métaux dans la charge, des procédés en lit bouillonnant sont donc préférés.

Pour les charges ne dépassant pas cette valeur seuil de teneur en métaux, la désactivation et la perte de charge a pu être limitée par l'utilisation d'un procédé d'hydrotraitement HYVAHL-F (brevets US5417846 et FR 2 681 871) qui comprend une ou plusieurs zones d'hydrodémétallation en lits fixes précédées d'au moins deux zones de garde d'hydrodémétallation (A) et (B) également en lits fixes, disposées en série pour être utilisées de façon cyclique consistant en la répétition successive des étapes b) et c) définies ci-après. Le procédé comprend les étapes suivantes: a) une étape dans laquelle les zones de garde sont utilisées toutes ensembles (fonctionnement en série) pendant une durée au plus égale au temps de désactivation et/ou de colmatage de l'une d'entre elles, b) une étape, durant laquelle la zone de garde désactivée et/ou colmatée est court-circuitée et le catalyseur qu'elle contient est régénéré et/ou remplacé par du catalyseur frais, et c) une étape durant laquelle les zones de garde (A) et (B) sont utilisées toutes ensembles, la zone de garde dont le catalyseur a été remplacé par du catalyseur frais au cours de l'étape précédente étant reconnectée et ladite étape étant poursuivie pendant une durée au plus égale au temps de désactivation et/ou de colmatage de l'une des zones de garde. Ce procédé d'hydrotraitement d'une fraction lourde d'hydrocarbures se caractérise par sa technologie en lit fixe et le fait que celle-ci soit constituée d'au moins deux étapes. La première étape, dite d'hydrodémétallation, consiste à faire passer de la charge hydrocarbonée et l'hydrogène sur un catalyseur d'hydrodémétallation distribué des deux zones de gardes, appelés "réacteurs permutables", dont le fonctionnement a été décrit ci-dessus. La seconde étape subséquente, dite d'hydrodésulfuration, consiste à faire passer le produit de la première étape et l'hydrogène sur un catalyseur d'hydrodésulfuration.

Pour un tel procédé, on utilise le plus souvent des catalyseurs spécifiques adaptés à chaque étape, sous des conditions opératoires moyennes, c'est-à-dire des pressions généralement comprises entre 3 MPa et 30 MPa et des températures généralement comprises entre 320 et 450°C. Les catalyseurs usuellement employés dans les procédés d'hydrotraitement sont composés d'un support sur lequel sont déposés des oxydes métalliques, tels que, par exemple, les oxydes de cobalt, de nickel ou de molybdène. Le catalyseur est ensuite sulfuré pour transformer tout ou partie des oxydes métalliques en phases sulfures métalliques. le support est en général à base d'alumine, son rôle consiste à disperser la phase active et présenter une texture et une porosité adaptées à une bonne captation des impuretés métalliques, tout en évitant les problèmes de colmatage mentionnés ci-avant.

Le problème posé par l'hydrotraitement catalytique en lit fixe de ces charges vient de ce que, lors des réactions d'hydrotraitement de fractions pétrolières contenant des complexes organométalliques, la plupart de ces complexes se détruisent en présence d'hydrogène, d'hydrogène sulfuré, et d'un catalyseur d'hydrotraitement. Le métal constitutif de ces complexes précipite alors sous la forme d'un sulfure solide qui vient se fixer sur la surface interne des pores. C'est en particulier le cas des complexes du vanadium, du nickel, du fer, du sodium, du titane, du silicium et du cuivre qui sont naturellement présents dans les pétroles bruts en plus ou moins grande importance selon l'origine du pétrole, et qui, lors des opérations de distillation ont tendance à se concentrer dans les fractions à point d'ébullition élevé et en particulier dans les résidus. C'est aussi le cas des liquéfiats de charbon qui renferment également des métaux, en particulier du fer et du titane. Le terme hydrodémétallation (HDM) est utilisé pour désigner ces réactions de destruction des complexes organométalliques dans les hydrocarbures. Au dépôt de ces impuretés s'ajoute aussi celui du coke, l'ensemble tend alors à désactiver et colmater rapidement le système catalytique. Les bouches des pores s'obstruent plus vite que leurs autres parties, ce qui va de paire avec une diminution de leur diamètre et entraîne une limitation accrue de la diffusion des molécules et une accentuation du gradient de concentration depuis la périphérie vers l'intérieur des pores au point que le dépôt de coke conduit assez rapidement à l'obstruction complète des pores. Ces phénomènes conduisent à des arrêts pour le remplacement des solides et à une surconsommation de catalyseur que l'Homme du métier souhaite minimiser.

Les procédés d'hydrotraitement de ce type de charge ainsi que les catalyseurs qui y sont chargés doivent donc être choisis de telle sorte que le cycle d'opération soit le plus long possible sans arrêt de l'unité.

Pour l'étape d'hydrodémétallation que l'on appelle dans la suite (HDM), le catalyseur idéal doit être apte à traiter des charges éventuellement riches en asphaltènes, tout en ayant un haut pouvoir démétallisant associé à une haute capacité de rétention en métaux et une grande résistance au cokage, liée à son pouvoir hydrogénant. La dénomination HDM regroupe d'une part les opérations d'élimination du vanadium, mais aussi du nickel et dans une moindre mesure du fer.

Des catalyseurs bimodaux permettant d'atteindre de forts rendements en HDM ont été décrits dans le brevet US5,221,656 ou encore dans les brevets US5,827,421 et US5,622,616 pour lesquels le mode d'utilisation est un mode en lit bouillonnant. Le support bimodal est constitué de deux modes de pores bien distincts. Le premier mode est centré sur 11-13nm et correspond à environ 70 % du volume poreux total. Le second mode correspond aux macropores et constitue environ 30 % du volume poreux total. L'avantage d'une telle distribution poreuse est aussi mise en avant dans les brevets US5,089,463 et US7,119,045. Le brevet US5,089,463 décrit un catalyseur présentant un premier mode autour de 16nm, alors que le brevet US7,119,045 présente un support dont le premier mode se situe entre 4 et 17nm.

La phase active initiale du catalyseur placé dans l'étape d'hydrodématallation est généralement constituée de nickel et de molybdène. Cette phase active connue pour être plus hydrogénante qu'une phase constituée de cobalt et de molybdène permet de limiter la formation de coke dans la porosité et ainsi la désactivation.

Pour l'étape d'hydrodésulfuration que l'on appelle dans la suite (HDS), le catalyseur doit présenter un fort potentiel hydrogénolysant de manière à réaliser un raffinage profond des produits : désulfuration, poursuite de la démétallation, abaissement du carbon conradson (CCR) et de la teneur en asphaltènes. Un tel catalyseur se caractérise par une faible teneur en macropososité.

Le brevet US6,589,908 décrit un catalyseur présentant une macroporosité faible c'est à dire une proportion du volume poreux dans les pores de diamètre supérieur à 350 Å inférieure à 5 % du volume poreux total. D'autre part, dans le brevet US4,818,743, la distribution poreuse peut être monopopulée entre 1 et 13nm ou bipopulée avec une différence relative entre les deux populations qui peut varier de 1 à 20nm comme dans le brevet US6,589,908.

La phase active initiale du catalyseur placé dans l'étape d'hydrodésulfuration est généralement constituée de cobalt et de molybdène comme cela est décrit dans le brevet US6,332,976. Le document EP 1 600 491 A1 décrit un procédé pour l'hydrotraitement catalytique de pétrole brut, notamment l'hydrodémétallisation, l'hydrodésulfuration et l'hydrocraquage réalisés en présence d'un catalyseur comprenant au moins un métal des groupes VI et VIIIB sur support. Aucun des catalyseurs ne comprend au moins deux métaux du groupe VIII. Le document ne décrit donc pas un système catalytique comprenant au moins deux catalyseurs comprenant deux métaux du groupe VIII et en particulier du Cobalt et du Nickel.

L'art antérieur a donc montré qu'il est de première importance de mettre en oeuvre une succession de catalyseur présentant une porosité différente entre la section HDM et la section HDS. En effet, la dispersion de la phase active nécessite de disposer de supports de fortes surfaces spécifiques, mais la porosité du support doit aussi permettre aux réactifs de diffuser facilement au sein de celle-ci. Il existe donc un compromis à réaliser entre accessibilité de la phase active et taille de la porosité. Lors de l'hydroraffinage des molécules, la distribution en taille des réactifs évolue. Généralement, la taille des molécules est ainsi plus petite dans la seconde section (HDS) que dans la première étape (HDM), ce qui implique que le diamètre moyen des mésopores soit plus élevé dans la section HDM que dans la section HDS. La grande majorité des procédés suivent cette règle, comme par exemple la demande de brevet US2006/0,060,509.

Par ailleurs, il est connu de l'Homme du métier d'après les brevets EP113,297 et EP113,284 que la teneur en métaux est plus élevée dans la seconde étape que dans la première. Un catalyseur situé dans la section HDM présente ainsi généralement une teneur en métal du groupe VI inférieure à 20 % en poids du trioxyde correspondant conformément à la description des brevets FR2,867,988 ou EP1,392,431.

Au contraire, un catalyseur situé dans la section HDS d'un procédé d'hydrotraitement de résidus en lit fixe comprend généralement au minium 10 % en poids de trioxyde du métal du groupe VI conformément à la description du brevet FR9,613,797 et jusqu'a 17% en poids de trioxyde de métal du groupe VI selon le brevet US 4 818 743.

Il ressort donc de l'art antérieur que des catalyseurs à base de nickel, molybdène et éventuellement de dopants tels que le phosphore, fortement hydrogénant et limitant ainsi le cokage sur un support multimodal ou bimodal et en particulier macroporeux sont généralement préconisés dans la section HDM des procédés en lit fixe d'hydrotraitement des coupes pétrolières lourdes (dont le point d'ébullition est supérieur à 370°C). Dans la seconde étape d'HDS de tels procédés, des catalyseurs à base de cobalt, de molybdène et éventuellement de phosphore sur des supports monomodaux mésoporeux sont privilégiés car ils permettent d'atteindre de meilleurs taux de conversion HDS.

L'enchaînement de ces formulations sur les supports définis ci dessus nécessite des teneurs en phase active relativement importantes (de 2 à 8% en poids de $MoO_3$ pour la section HDM et de 10 et 17% en poids de $MoO_3$ pour la section HDS), pénalisant ainsi le coût des catalyseurs.

De manière surprenante, la demanderesse a découvert que l'utilisation d'une formulation mixte unique à la fois pour la section HDM et pour la section HDS, à base de plusieurs promoteurs du groupe VIB et du groupe VIII, permettait de réduire significativement la teneur globale en élément du groupe VIB tout en améliorant les performances globales du procédé. La présente invention concerne la définition de la formulation unique qu'il convient d'utiliser dans les différentes zones catalytiques d'un procédé d'hydroconversion des produits pétroliers lourds (point d'ébullition supérieur à 370°C) en lit fixe.

Un objet de l'invention est de fournir un système catalytique comme défini dans la revendication 1.

Un autre objet de l'invention est de fournir un procédé d'hydrotraitement de charges hydrocarbonées lourdes comprenant au moins une étape d'hydrodémetallation et au moins une étape d'hydrodésulfuration, et mettant en oeuvre le système catalytique selon l'invention.

Description de l'invention

La demanderesse a découvert que les éléments de la phase active constituant les catalyseurs chargés dans les différents réacteurs d'un procédé d'hydrotraitement de fractions lourdes d'hydrocarbures peuvent être combinés entre eux de telle sorte que leur teneur dans la section HDS comme dans la section HDM réponde à une même formulation définie ci dessous et que les performances du système catalytique complet mis en oeuvre dans au moins une étape d'hydrodémetallation, au moins une étape d'hydrodésulfuration et éventuellement au moins une étape d'hydrodésasphaltage en soient améliorées par rapport à celles de l'art antérieur.

Le système catalytique comprend au moins deux catalyseurs comprenant au moins un métal du groupe VIB, au moins deux métaux du groupe VIII, dont l'un est appelé promoteur majoritaire VIII-1 et le ou les autres sont appelés co-promoteurs VIII-i avec i compris entre 2 et 5 et au moins un support constitué d'un oxyde réfractaire poreux, dans lequel les éléments du groupes VIII sont présents dans les proportions définies par le rapport atomique [VIII-1/(VIII-1+....+VIII-i)], ledit rapport étant compris entre 0,5 et 0,85.

Le métal du groupe VIB est le molybdène.

Les métaux du groupe VIII sont choisis parmi le nickel ou le cobalt.

Dans la suite de la description, le métal du groupe VIII majoritaire dans la formulation du catalyseur est appelé promoteur (VIII-1) et les autres métaux du groupe VIII (au moins un autre promoteur), en quantité plus faible sont appelés co-promoteurs (VIII-i) avec i compris entre 2 et 5 et de préférence i est égal à 2.

Conformément à l'invention, les quantités respectives des métaux du groupe VIII sont telles que le rapport atomique [VIII-1/(VIII-1+....+VIII-i)] avec i compris entre 2 et 5 et de préférence i égal à 2, est compris entre 0,5 et 0,85, de préférence entre 0,55 et 0,85, de manière très préférée entre 0,6 et 0,85, et de manière encore plus préférée entre 0,65 et 0,85.

Le métal du groupe VIB est le molybdène, le promoteur majoritaire (VIII-1) étant le cobalt ou le nickel.

Dans le cas où i est égal à 2, ledit catalyseur comprend un métal du groupe VIB et deux métaux du groupe VIII, le métal du groupe VIB étant le molybdène et les métaux du groupe VIII étant le nickel et le cobalt.

Dans ce cas, le promoteur majoritaire (VIII-1) peut avantageusement être le cobalt ou le nickel, et de manière très préférée, le promoteur majoritaire (VIII-1) est le cobalt.

Selon un mode de réalisation très préféré, le promoteur majoritaire (VIII-1) est le cobalt et le co-promoteur (VIII-2) est le nickel.

Ledit rapport atomique est identique que le catalyseur soit utilisé dans une section HDM ou dans une section HDS.

Les quantités respectives de métal ou métaux du groupe VIB et de métaux du groupe VIII sont telles que le rapport atomique métaux du groupe VIII sur métal du groupe VIB (VIII/VIB) soit compris entre 0,3:1 à 0,7:1 et de préférence entre 0,35:1 à 0,55:1.

Ce rapport est identique que le catalyseur soit utilisé dans une section HDM ou dans une section HDS.

Le catalyseur peut éventuellement contenir au moins un élément dopant choisi parmi le phosphore et le bore.

La teneur en élément dopant est avantageusement comprise entre 0,1 à 6 % en poids de trioxyde de bore et de pentaoxyde de phosphore par rapport à la masse totale du catalyseur, de préférence entre 0,5 et 5% poids.

Selon un mode de réalisation très préféré, le catalyseur comprend le molybdène comme métal du groupe VIB, le nickel et le cobalt comme métaux du groupe VIII et du phosphore comme élément dopant.

Selon un mode de réalisation encore plus préféré, le catalyseur comprend le molybdène comme métal du groupe VIB, le cobalt comme promoteur majoritaire (VIII-1), le nickel comme co-promoteur (VIII-2) et du phosphore comme élément dopant.

Avantageusement, ces teneurs en métaux et en phosphore varient selon que le catalyseur est destiné à être employé dans une section HDM ou dans une section HDS.

Le premier catalyseur qui est destiné à être utilisé dans une section HDM, ledit catalyseur comprend une teneur en métal ou métaux du groupe VIB comprise entre 2 et 9 % poids de trioxyde du métal ou des métaux du groupe VIB par rapport à la masse totale du catalyseur, et de manière préférée, entre 3 et 7 % poids et la somme des teneurs en métaux du groupe VIII, est avantageusement comprise entre 0,3 et 2 % en poids de l'oxyde des métaux du groupe VIII par rapport à la masse totale du catalyseur, de préférence entre 0,5 et 1,5 %, de manière préférée, entre 0,6 et 1,5 % poids.

De préférence, la teneur en promoteur majoritaire (VIII-1) est comprise entre 0,25 et 1,7 % en poids de l'oxyde des métaux du groupe VIII par rapport à la masse totale du catalyseur et la teneur en co-promoteur (VIII-2) est avantageusement comprise entre 0,05 et 1 % en poids de l'oxyde des métaux du groupe VIII par rapport à la masse totale du catalyseur.

Dans ce cas, ledit catalyseur comprend de préférence un métal du groupe VIB, le métal du groupe VIB étant le molybdène et deux métaux du groupe VIII, les métaux du groupe VIII étant le nickel et le cobalt et de manière très préférée, le promoteur majoritaire (VIII-1) est le cobalt et le co-promoteur (VIII-2) est le nickel.

Lorsque ledit catalyseur est destiné à être utilisé dans une section HDM, de manière préférée, ledit catalyseur comprend également avantageusement une teneur en élément dopant choisi parmi le phosphore et le bore comprise entre 0,1 à 2,5 % en poids de trioxyde de bore et de pentaoxyde de phosphore par rapport à la masse totale du catalyseur, de préférence comprise entre 0,5 % et 2 % poids. De manière très préférée, l'élément dopant est le phosphore.

Le deuxième catalyseur qui est destiné à être utilisé dans une section HDS, ledit catalyseur comprend une teneur en métal du groupe VIB strictement supérieure à 9 et inférieure à 17 % poids de trioxyde du métal du groupe VIB par rapport à la masse totale du catalyseur, de préférence comprise entre 10 % et 16 % et de manière préférée, entre 12 et 16 % poids et la somme des teneurs en métaux du groupe VIII, est avantageusement strictement supérieure à 2 et inférieure à 5 % en poids de l'oxyde des métaux du groupe VIII par rapport à la masse totale du catalyseur, de préférence strictement supérieure à 2 et inférieure à 4 %, de manière préférée, comprise entre 2,5 et 4 % poids.

De préférence, la teneur en promoteur majoritaire (VIII-1) est comprise entre 1 et 4,5 % en poids de l'oxyde des métaux du groupe VIII par rapport à la masse totale du catalyseur et la teneur en co-promoteur (VIII-2) est avantageusement comprise entre 0,15 et 2,5 % en poids de l'oxyde des métaux du groupe VIII par rapport à la masse totale du catalyseur.

Dans ce cas, ledit catalyseur comprend de préférence un métal du groupe VIB, le métal du groupe VIB étant le molybdène et deux métaux du groupe VIII, les métaux du groupe VIII étant le nickel et le cobalt et de manière très préférée, le promoteur majoritaire (VIII-1) est le cobalt et le co-promoteur (VIII-2) est le nickel.

De manière préférée, ledit catalyseur comprend également avantageusement une teneur en élément dopant choisi parmi le phosphore et le bore comprise entre 0,5 à 6 % en poids de trioxyde de bore et de pentaoxyde de phosphore par rapport à la masse totale du catalyseur, de préférence comprise entre 1,5 % et 5 % poids. De manière très préférée, l'élément dopant est le phosphore.

La quantité de phosphore et/ou de bore est avantageusement telle que le rapport atomique phosphore plus bore sur métal du groupe VIB ((P+B)/VIB) est compris entre 0,1:1 à 1,5:1 et de préférence entre 0,1:1 à 0,7:1.

Ce rapport est identique que le catalyseur soit utilisé dans une section HDM ou dans une section HDS.

Les catalyseurs qui font part du système catalytique présentent avantageusement un volume poreux total (VPT) d'au moins 0,3 ml/g et de préférence d'au moins 0,4 ml/g.

Dans le cas où le catalyseur est utilisé dans une section HDM, le volume poreux total est avantageusement d'au moins 0,5 ml/g, de préférence d'au moins 0,6 ml/g, et de manière très préférée, d'au moins 0,65 ml/g.

Dans le cas où le catalyseur est utilisé dans une section HDS, le volume poreux total est avantageusement d'au moins 0,3 ml/g, et de préférence d'au moins 0,4 ml/g.

Le volume poreux total est déterminé par la méthode de la pycnomètrie au mercure. Les volumes sont mesurés par la technique de la pénétration du mercure dans laquelle on applique la loi de Kelvin qui donne la relation entre la pression, le diamètre du plus petit pore dans lequel le mercure pénètre à ladite pression, l'angle de mouillage et la tension superficielle selon la formule :

$$d = \frac{(4.t.\cos(\theta)).10}{P}$$

dans laquelle

"d" représente le diamètre du pore (nm)
t la tension superficielle (48,5 Pa),
θ l'angle de contact, (θ = 140 degrés) et
P la pression (MPa)

Les catalyseurs qui font part du système catalytique présentent avantageusement un volume macroporeux $V_{50nm}$, défini comme le volume des pores de diamètre supérieur à 50 nm, compris entre 0 et 40% du volume poreux total et de préférence entre 0 et 30% du volume poreux total.

Dans le cas où le catalyseur est utilisé dans une section HDM, le volume macroporeux est supérieur à 5 %, de préférence 10 % et de façon encore plus préférée 20 % du volume poreux total (VPT). Une telle caractéristique peut avantageusement être obtenue par une distribution multimodale, comme cela est le cas pour un support dit en "bogue de chataîgne", ou à partir d'un support de distribution bimodale, le premier mode étant mésoporeux et le second macroporeux.

Dans le cas où le catalyseur est utilisé dans une section HDS, le volume macroporeux est inférieur à 10 %, de façon préférée 5%, et de façon encore plus préférée 1% du volume poreux total (VPT).

Les catalyseurs qui font part du système catalytique présentent avantageusement un volume mésoporeux d'au moins 0,3 ml/g, et de préférence d'au moins 0,5 ml/g, que le catalyseur soit utilisé dans une section HDM ou dans une section HDS.

Le diamètre à Vméso/2 (diamètre mésoporeux moyen), le volume mésoporeux étant le volume correspondant aux pores de diamètre inférieur à 50 nm, est avantageusement compris entre 5 nm et 36 nm et de préférence entre 6 et 20 nm.

Dans le cas où le catalyseur est utilisé dans une section HDM, le diamètre mésoporeux est avantageusement compris entre 10 et 36 nm et de préférence entre 10 et 20 nm.

Dans le cas où le catalyseur est utilisé dans une section HDS, le diamètre mésoporeux est avantageusement compris entre 5 nm et 20 nm et de préférence entre 6 et 15 nm.

Les catalyseurs qui font part du système catalytique présentent avantageusement une surface spécifique BET (SS) d'au moins 120 m$^2$/g, de préférence d'au moins 150 m$^2$/g. On entend par surface BET, la surface spécifique déterminée par adsorption d'azote conformément à la norme ASTM D 3663-78 établie à partir de la méthode BRUNAUER - EMMET - TELLER décrite dans le périodique "The journal of the American Chemical Society", 60, 309 (1938).

Le support constitué d'un oxyde réfractaire poreux est avantageusement choisi parmi les matrices à forte composante aluminique, telle que par exemple l'alumine ou la silice-alumine. Des dopants peuvent y être introduits. Parmi ceux-ci, on retrouve la silice, le titane ou encore la zircone.

Lorsque la matrice contient de la silice, la quantité de silice est de préférence inférieure ou égale à 25 % en poids par rapport au poids total de la matrice aluminique. De manière préférée, le support est l'alumine et de préférence l'alumine de type gamma cubique.

Les catalyseurs qui font part du système catalytique sont avantageusement sous forme totalement ou partiellement sulfurée.

Les catalyseurs qui font part du système catalytique peuvent avantageusement être obtenu par toutes les méthodes bien connues de l'Homme du métier. On utilise comme support des extrudés de diamètre généralement compris entre 0,5 et 10 mm, de préférence 0,8 et 3,2 mm. Sur ces extrudés ou avant mise en forme par extrusion, on peut éventuellement introduire par toute méthode connue, et à n'importe quelle étape de la préparation, de préférence par imprégnation ou comalaxage, tout ou partie des métaux catalytiques, ou d'un composé des métaux catalytiques du catalyseur final. L'imprégnation classiquement réalisée est celle dite "à sec" bien connue de l'Homme du métier. Elle peut être réalisée en une seule étape par une solution contenant l'ensemble des éléments constitutifs du catalyseur final, c'est-à-dire une solution contenant au moins un composé du phosphore ou du bore, au moins deux composés d'au moins deux métaux du groupe VIII de la classification périodique et au moins un composé d'au moins un métal du groupe VIB.

Parmi les précurseurs qui peuvent être introduits dans la solution en tant que source d'éléments du groupe VIII, figurent avantageusement : les citrates, oxalates, carbonates, hydroxycarbonates, hydroxydes, phosphates, sulfates, aluminates, molybdates, tungstates, oxydes, nitrates, halogénures, par exemple, chlorures, fluorures, bromures, acétates, ou tout mélange des précurseurs énoncés ici. Concernant les sources de l'élément du groupe VI qui sont bien connues de l'Homme du métier, figurent avantageusement par exemple pour le molybdène et le tungstène : les oxydes, hydroxydes, acides molybdiques et tungstiques et leurs sels, en particulier les sels d'ammonium, heptamolybdate d'ammonium, tungstate d'ammonium, l'acide phosphomolybdique, l'acide phosphotungstique et leurs sels. On utilise de préférence les oxydes ou les sels d'ammonium tels que le molybdate d'ammonium, l'heptamolybdate d'ammonium ou le tungstate d'ammonium.

La source de phosphore préférée est l'acide orthophosphorique, mais ses sels et esters comme les phosphates alcalins, phosphate d'ammonium, phosphate de gallium ou phosphates d'alkyles conviennent également. Les acides phosphoreux, par exemple l'acide hypophosphoreux, l'acide phosphomolybdique et ses sels, l'acide phosphotungstique et ses sels peuvent être avantageusement employés.

La source de bore peut être l'acide borique, de préférence l'acide orthoborique ($H_3BO_3$), le biborate ou le pentaborate d'ammonium, l'oxyde de bore, ou les esters boriques.

Le support est généralement préalablement mis en forme et calciné avant imprégnation. La mise en forme peut-être avantageusement réalisée par extrusion, par pastillage, par la méthode de la goutte d'huile, par granulation au plateau tournant ou par toute autre méthode bien connue de l'Homme du métier. La calcination peut-être avantageusement opérée entre 500 et 1000°C sous air sec ou humide.

Un agent chélatant de nature organique peut avantageusement être introduit dans la solution si l'Homme du métier le juge nécessaire. Le produit est alors généralement mûri, séché et calciné sous atmosphère oxydante, par exemple sous air, habituellement à une température d'environ 300 à 600°C et de préférence 350 à 550°C.

L'imprégnation peut aussi être avantageusement réalisée en au moins deux fois. Les différents éléments peuvent ainsi être avantageusement imprégnés successivement ou bien un des éléments peut aussi être imprégné en plusieurs séquences. Une des imprégnations qui est réalisée peut notamment servir à l'utilisation d'un composé organique que l'Homme du métier aurait souhaité introduire en plus des éléments constitutifs du catalyseur final.

La solution des composés constitutifs des éléments du catalyseur final peut être avantageusement préparée dans un solvant aqueux, mais aussi dans un mélange eau-solvant organique ou encore dans un solvant organique pur. L'éthanol ou le toluène peuvent ainsi être cités comme exemple de solvant non aqueux. Le pH de cette solution pourra être modifiée par l'ajout éventuel d'un acide.

La présente invention s'applique au cas où un ou plusieurs des catalyseurs n'auraient pas été calcinés. Dans ce cas, après imprégnation le catalyseur est seulement avantageusement séché.

Les différents catalyseurs selon l'invention peuvent avantageusement être mis en oeuvre notamment dans des procédés d'hydrotraitement permettant de convertir des charges hydrocarbonées lourdes contenant des métaux. Un objectif recherché concerne une amélioration des performances de l'hydrodésulfuration, l'hydrogénation, l'hydrodéoxygénation, l'hydrodéaromatisation, l'hydroisomérisation, l'hydrodéalkylation, l'hydrodéassphaltage et l'hydrodémétallation par rapport aux catalyseurs connus de l'art antérieur.

L'objet de l'invention est de fournir un système catalytique comprenant au moins deux catalyseurs comme défini dans la revendication 1.

On entend par premier catalyseur le catalyseur qui rencontre le premier la charge lorsque le système catalytique est mis en oeuvre dans un procédé, les premiers et deuxièmes catalyseurs étant les catalyseurs décrit s précédemment.

Avantageusement, ledit système catalytique comporte un premier catalyseur présentant un volume macroporeux supérieur à 5 % du volume poreux total (VPT).

Avantageusement, ledit système catalytique comporte une deuxième catalyseur présentant un volume macroporeux inférieur à 10 % du volume poreux total (VPT).

Un autre objet de l'invention est de fournir un procédé d'hydrotraitement de charges hydrocarbonées lourdes comprenant au moins une étape d'hydrodémétallation et au moins une étape d'hydrodésulfuration, et mettant en oeuvre le système catalytique selon l'invention.

Le procédé d'hydrotraitement selon l'invention permet avantageusement de traiter des fractions lourdes d'hydrocarbures contenant des impuretés soufrées et des impuretés métalliques. La sélection d'une combinaison de catalyseurs de formulation définie ci dessus permet avantageusement de maximiser les fonctions HDM, HDS, et éventuellement d'hydrodésasphaltage.

Les charges traitées dans le procédé selon l'invention sont avantageusement choisies parmi les résidus atmosphériques, les résidus sous vide issus de distillation directe, les huiles désasphaltées, les résidus issus des procédés de conversion tels que par exemple ceux provenant du coking, d'une hydroconversion en lit fixe, en lit bouillonnant, ou encore en lit mobile, pris seuls ou en mélange. Ces charges peuvent avantageusement être utilisées telle quelles ou encore diluées par une fraction hydrocarbonée ou un mélange de fractions hydrocarbonées pouvant être choisies parmi les produits issus du procédé FCC, une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry, ou pouvant venir de la distillation, les fractions gazoles notamment celles obtenues par distillation sous vide dénommée selon la terminologie anglo-saxonne VGO (Vaccuum Gas Oil). Les charges lourdes peuvent ainsi avantageusement comprendre des coupes issues du procédé de liquéfaction du charbon, des extraits aromatiques, ou toutes autres coupes hydrocarbonées.

Lesdites charges lourdes présentent généralement plus de 1% en poids de molécules ayant un point d'ébullition supérieur à 500°C, une teneur en métaux Ni+V supérieure à 1 ppm poids, de préférence supérieure à 20 ppm poids, une teneur en asphaltènes, précipité dans l'heptane, supérieure à 0,05 % en poids, de préférence, supérieure à 1 % en poids.

Les charges lourdes peuvent avantageusement aussi être mélangées avec du charbon sous forme de poudre, ce mélange est généralement appelé slurry. Ces charges peuvent avantageusement être des sous produits issus de la conversion du charbon et re-mélangées à du charbon frais. La teneur en charbon dans la charge lourde est généralement et de préférence un ratio ¼ (Oil/Coal) et peut avantageusement varier largement entre 0,1 et 1. Le charbon peut contenir de la lignite, être un charbon sub-bitumineux (selon la terminologie anglo-saxonne), ou encore bitumineux. Tout autre type de charbon convient pour l'utilisation de l'invention, à la fois dans des réacteurs à lit fixe ou dans des réacteurs fonctionnant en lit bouillonnant.

Conformément à l'invention, le procédé comprend au moins une étape d'hydrodémetallation et au moins une étape d'hydrodésulfuration et donc au total au moins deux étapes d'hydrodémetallation et d'hydrodésulfuration .

Selon un mode de réalisation préféré, le procédé comprend au total trois à huit étapes d'hydrodémetallation et d'hydrodésulfuration mettant en oeuvre trois à huit et de préférence trois à cinq étapes d'hydrodémetallation et d'hydrodésulfuration mettant en oeuvre trois à cinq catalyseurs. La teneur en élément du groupe VIB et la porosité du catalyseur répondent toujours aux mêmes critères que ceux énoncés précédemment et donc dépendent de la localisation du catalyseur dans le procédé et de l'objectif en terme de sélectivité (HDS/HDM).

Le procédé selon l'invention est avantageusement mis en oeuvre dans un à dix réacteurs successifs, les catalyseurs pouvant avantageusement être chargés dans un même réacteur ou dans des réacteurs séparés. De préférence, de un à quatre peuvent être chargés dans un même réacteur. Si plusieurs catalyseurs sont chargés dans un même réacteur leur empilement peut être réalisé en séparant les zones catalytiques ou non.

Dans un mode de réalisation préféré, des réacteurs permutables, c'est à dire des réacteurs fonctionnant en alternance, dans lequel des catalyseurs d'HDM peuvent de préférence être mis en oeuvre, peuvent être utilisés en amont de l'unité.

Lesdits catalyseurs d'HDM décrite ci dessus comprennent au moins un métal du groupe VIB, au moins deux métaux du groupe VIII, appelés promoteur majoritaire VIII-1 et co-promoteurs VIII-i avec i compris entre 2 et 5 et au moins un support constitué d'un oxyde réfractaire poreux, dans lequel les éléments du groupes VIII sont présents dans les proportions définies par le rapport atomique [VIII-1/(VIII-1+....+VIII-i)], ledit rapport étant compris entre 0,5 et 0,85 et de préférence, lesdits catalyseurs d'HDM pouvant éventuellement contenir au moins un élément dopant choisi parmi le phosphore et le bore.

Ledit catalyseur comprend une teneur en métal ou métaux du groupe VIB comprise entre 2 et 9 % poids de trioxyde du métal ou des métaux du groupe VIB par rapport à la masse totale du catalyseur, et de manière préférée, entre 3 et 7 % poids et la somme des teneurs en métaux du groupe VIII, est avantageusement comprise entre 0,3 et 2 % en poids de l'oxyde des métaux du groupe VIII par rapport à la masse totale du catalyseur, de préférence entre 0,5 et 1,5 %, de manière préférée, entre 0,6 et 1,5 % poids.

De préférence, la teneur en promoteur majoritaire (VIII-1) est comprise entre 0,25 et 2,2 % en poids de l'oxyde des métaux du groupe VIII par rapport à la masse totale du catalyseur et la teneur en co-promoteur (VIII-2) est avantageusement comprise entre 0,05 et 1 % en poids de l'oxyde des métaux du groupe VIII par rapport à la masse totale du catalyseur. Dans ce cas, ledit catalyseur comprend de préférence un métal du groupe VIB, le métal du groupe VIB étant avantageusement le molybdène et deux métaux du groupe VIII, les métaux du groupe VIII étant le nickel et le cobalt et de manière très préférée, le promoteur majoritaire (VIII-1) est le cobalt et le co-promoteur (VIII-2) est le nickel.

De manière préférée, ledit catalyseur comprend également avantageusement une teneur en élément dopant choisi parmi le phosphore et le bore comprise entre 0,1 à 2,5 % en poids de trioxyde de bore et de pentaoxyde de phosphore par rapport à la masse totale du catalyseur, de préférence comprise entre 0,5 % et 2 % poids. De manière très préférée, l'élément dopant est le phosphore.

Le volume poreux total dudit catalyseur d'HDM est avantageusement d'au moins 0,5 ml/g, de préférence d'au moins 0,6 ml/g, et de manière très préférée, d'au moins 0,65 ml/g.

Le volume macroporeux dudit catalyseur d'HDM est avantageusement supérieur à 5 %, de préférence 10 % et de façon encore plus préférée 20 % du volume poreux total (VPT).

Le diamètre mésoporeux dudit catalyseur d'HDM est avantageusement compris entre 10 et 36 nm et de préférence entre 10 et 20 nm.

Dans ce mode de réalisation préféré, les réacteurs permutables sont suivis ensuite par des réacteurs en série, dans lequel des catalyseurs d'HDS peuvent avantageusement être mis en oeuvre.

Ledit catalyseur comprend une teneur en métal du groupe VIB est strictement supérieure à 9 et inférieure à 17 % poids de trioxyde du métal du groupe VIB par rapport à la masse totale du catalyseur, de préférence comprise entre 10 % et 16 % et de manière préférée, entre 12 et 16 % poids et la somme des teneurs en métaux du groupe VIII, est supérieur à 2 et inférieur à 5 % en poids de l'oxyde des métaux du groupe VIII par rapport à la masse totale du catalyseur, de préférence entre 2 et 4 %, de manière préférée, entre 2,5 et 4 % poids.

De préférence, la teneur en promoteur majoritaire (VIII-1) est comprise entre 1 et 4,5 % en poids de l'oxyde des métaux du groupe VIII par rapport à la masse totale du catalyseur et la teneur en co-promoteur (VIII-2) est avantageusement comprise entre 0,15 et 2,5 % en poids de l'oxyde des métaux du groupe VIII par rapport à la masse totale du catalyseur.

Dans ce cas, ledit catalyseur comprend un métal du groupe VIB, le métal du groupe VIB étant le molybdène et deux métaux du groupe VIII, les métaux du groupe VIII étant le nickel et le cobalt et de manière très préférée, le promoteur majoritaire (VIII-1) est le cobalt et le co-promoteur (VIII-2) est le nickel.

De manière préférée, ledit catalyseur comprend également avantageusement une teneur en élément dopant choisi parmi le phosphore et le bore comprise entre 0,5 à 6 % en poids de trioxyde de bore et de pentaoxyde de phosphore par rapport à la masse totale du catalyseur, de préférence comprise entre 1,5 % et 5 % poids. De manière très préférée, l'élément dopant est le phosphore.

Le volume poreux total dudit catalyseur d'HDS est avantageusement d'au moins 0,3 ml/g, et de préférence d'au moins 0,4 ml/g.

Le volume macroporeux dudit catalyseur d'HDS est avantageusement inférieur à 10 %, de façon préférée 5%, et de façon encore plus préférée 1% du volume poreux total (VPT).

Le diamètre mésoporeux est avantageusement compris entre 5 nm et 20 nm et de préférence entre 6 et 15 nm.

Dans un mode de réalisation très préféré, deux réacteurs permutables sont utilisés en amont de l'unité, avantageusement pour l'HDM. Ils sont suivis avantageusement par un à quatre réacteurs en série, avantageusement utilisés pour l'HDS.

Les proportions de catalyseurs de différents types utilisés dans le système catalytique mis en oeuvre dans le procédé selon l'invention peuvent avantageusement représenter de 5% de catalyseur d'HDM et 95% de catalyseur d'HDS exprimé en pourcentage du volume catalytique total de l'unité, à 80% de catalyseur d'HDM et 20% du volume catalytique total de catalyseur d'HDS.

Dans un mode de réalisation préféré, le volume de catalyseur d'HDM total représente 10 à 50% du volume catalytique total de l'unité et de manière encore plus préférée 15 à 40% du volume catalytique total de l'unité, le reste du volume catalytique de l'unité étant occupé par le ou les catalyseurs d'HDS.

Dans le cas où plus de deux catalyseurs sont utilisés, lesdits catalyseurs sont classés en fonction de leur fonctionnalité (HDM ou HDS) et leur volume catalytique est additionné de manière à se rapporter à la définition précédente. D'autres part, leurs caractéristiques respectent celles définies précédemment en fonction de leur classification en catalyseur d'HDM ou HDS.

Le procédé selon l'invention peut avantageusement être mis en oeuvre en lit fixe avec pour objectif l'élimination des métaux et du soufre et d'abaisser le point d'ébullition moyen des hydrocarbures. Dans le cas où le procédé selon l'invention est mis en oeuvre en lit fixe, la température de mise en oeuvre est avantageusement comprise entre 320°C et 450°C, de préférence 350°C à 410°C, sous une pression partielle en hydrogène avantageusement comprise entre 3 MPa et 30 MPa, de préférence entre 10 et 20 MPa, à une vitesse spatiale avantageusement comprise entre 0,05 et 5 volume de charge par volume de catalyseur et par heure, et avec un rapport hydrogène gazeux sur charge liquide d'hydrocarbures avantageusement compris entre 200 et 5000 normaux mètres cubes par mètres cubes, de préférence 500 à 1500 normaux mètres cubes par mètres cubes.

Le procédé selon l'invention peut avantageusement être mis en oeuvre en lit bouillonnant sur les mêmes charges. Dans le cas où le procédé selon l'invention est mis en oeuvre en lit bouillonnant, le catalyseur est avantageusement mis en oeuvre à une température comprise entre 320 et 450°C, sous une pression partielle d'hydrogène avantageusement comprise entre 3 MPa et 30 MPa, de préférence entre 10 et 20 MPa, à une vitesse spatiale avantageusement comprise entre 0,1 et 10 volumes de charge par volume de catalyseur et par heure, de préférence entre 0,5 et 2 volumes de charge par volume de catalyseur et par heure, et avec un rapport hydrogène gazeux sur charge liquide d'hydrocarbures avantageusement compris entre 100 et 3000 normaux mètres cubes par mètres cubes, de préférence entre 200 à 1200 normaux mètres cubes par mètres cubes.

Selon un mode de réalisation préféré, le procédé selon l'invention est mis en oeuvre en lit fixe.

Avant leur mise en oeuvre dans le procédé selon l'invention, les catalyseurs sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà connue déjà décrite dans la littérature. Une méthode de sulfuration classique bien connue de l'Homme du métier consiste à chauffer le mélange de solides sous flux d'un mélange hydrogène et hydrogène sulfuré ou sous flux d'un mélange d'hydrogène et d'hydrocarbures contenant des molécules soufrées à une température comprise entre 150 et 800°C, de préférence entre 250 et 600°C, généralement dans une zone réactionnelle à lit traversé.

L'invention concerne donc les étapes d'hydrodémétallation et d'hydrodésulfuration, cependant, d'autres étapes de transformation peuvent avantageusement être mises en oeuvre, soit en amont de l'étape d'hyrodémétallation, soit en aval de l'étape d'hydrodésulfuration soit entre les étapes d'hydrodémétallation et d'hydrodésulfuration. Les catalyseurs utilisés dans la section HDM et dans la section HDS conservent alors les propriétés.

Les exemples suivants illustrent l'invention sans toutefois en limiter la portée.

Exemple 1 : Préparation d'un support A rentrant dans la composition des catalyseurs

Nous avons préparé un support A à base d'alumine de manière à pouvoir préparer des catalyseurs tels que décrits dans les exemples qui suivent à partir d'un même support mis en forme. Pour ce faire, nous avons utilisé une matrice composée de boehmite ou gel d'alumine commercialisé sous le nom de Versal 250 par la société La Roche Chemicals. Ce gel a été mélangé à une solution aqueuse contenant de l'acide nitrique à 52,7% (1% poids d'acide par gramme de gel sec) puis malaxé pendant 20 minutes dans un malaxeur à bras en Z (Aoustin MX2). La pâte a ensuite été mélangée avec une solution aqueuse contenant de l'ammoniaque à 20,3% (40 % mol d'ammoniaque par mole d'acide) pendant 5 minutes dans le même malaxeur. A l'issue de ce malaxage, la pâte obtenue est passée à travers une filière ayant des orifices trilobes de diamètre inscrit égal à 2,0 mm sur une extrudeuse piston (Retma). Les extrudés sont ensuite séchés une nuit à 120°C puis calcinés à 700°C pendant deux heures sous un débit d'air humide contenant 200 g d'eau / kg d'air sec.

On obtient ainsi des extrudés cylindriques de 1,6 mm de diamètre, ayant une surface spécifique de 210 m²/g, un volume poreux total de 0,95 ml/g, une distribution de mésopores centrée sur 13 nm (dp à Vméso/2). Cette alumine A contient en outre 0,25 ml/g de volume poreux dans les pores de diamètre supérieur à 50 nm (volume macroporeux), c'est à dire un volume macropreux égal à 26 % du volume poreux total.

Exemple 2 : Préparation d'un support B rentrant dans la composition des catalyseurs

Nous avons préparé un support B à base d'alumine de manière à pouvoir préparer des catalyseurs tels que décrits dans les exemples qui suivent à partir d'un même support mis en forme. Pour ce faire, une matrice composée de boehmite tabulaire commercialisée sous le nom SB3 par la société Condéa Chemie GmbH a été mélangée à une solution contenant de l'acide nitrique à 66% (7% en poids d'acide par gramme de gel sec), puis malaxée pendant 15 minutes. A l'issu de ce malaxage, la pâte obtenue a été passée à travers une filière ayant des orifices trilobes de diamètre inscrit égal à 1,5 mm. Les extrudés ont ensuite été séchés durant une nuit à 120°C, puis calcinés à 550°C pendant 2 heures sous air humide, contenant 7,5% en volume d'eau. On obtient ainsi des extrudés trilobes de 1,3 mm de diamètre ayant une surface spécifique de 245 m²/g, un volume poreux total de 0,65 ml/g et une distribution poreuse monomodale centrée sur 11 nm. Le support B présente ainsi un volume macropreux égal à 0 % du volume poreux total.

L'analyse par diffraction des rayons X révèle que la matrice n'est composée que d'alumine gamma cubique de faible cristallinité.

Exemple 3 : Préparation d'un catalyseur C (selon l'invention)

Nous avons imprégné à sec un support A bimodal issu de l'exemple 1. La solution aqueuse de l'imprégnation contient des sels du molybdène, du nickel et du cobalt ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel (cobalt) est le nitrate de nickel (cobalt) $Ni(NO_3)_2.6H_2O(Co(NO_3)_2·6H_2O)$. Les teneurs de chacun de ces sels en solution ont été déterminées de manière à fixer la quantité désirée de chaque élément à la surface du support.

Après maturation à température ambiante dans une atmosphère saturée en eau, les extrudés du support imprégné sont séchés une nuit à 120°C puis calcinés à 500°C durant 2 heures sous air. La teneur en trioxyde de molybdène est de 6% poids, celle en oxyde de nickel est de 0,4% poids, celle en oxyde de cobalt de 0,74% poids et celle du pentaoxyde de phosphore est de 1,2% poids. Le rapport atomique [Co/(Co+Ni)] est égal à 0,65 et le rapport atomique phosphore sur Molybdène est égal à 0,4. Enfin, le rapport atomique (Ni+Co)/Mo est égal à 0,37.

Les caractéristiques texturales du catalyseur C obtenu sont données dans le tableau 1.

Tableau 1 : Caractéristiques texturales du catalyseur C et du support A

|  | A | C |
|---|---|---|
| SBET (m2/g) | 210 | 190 |
| VPT (ml/g) | 0,95 | 0,9 |
| dp$_{Vméso/2}$ (nm) | 13 | 13,5 |
| V$_{50nm}$(ml/g) | 0,25 | 0,25 |
| V$_{50nm}$ en % du VPT | 26 | 28 |

Exemple 4 : Préparation d'un catalyseur D (selon l'invention)

Nous avons imprégné à sec le support A précédent dont les caractéristiques sont indiquées dans le tableau 1. La solution aqueuse de l'imprégnation contient des sels du molybdène, du nickel et du cobalt ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel (cobalt) est le nitrate de nickel (cobalt) $Ni(NO_3)_2.6H_2O$ ($Co(NO_3)_{2.6}H_2O$). Les teneurs de chacun de ces sels en solution ont été déterminées de manière à fixer la quantité désirée de chaque élément à la surface du support.

Après maturation à température ambiante dans une atmosphère saturée en eau, les extrudés du support imprégné sont séchés une nuit à 120°C puis calcinés à 500°C durant 2 heures sous air. La teneur en trioxyde de molybdène est de 4,5% poids, celle en oxyde de nickel est de 0,3% poids, celle en oxyde de cobalt de 0,55% poids et celle du pentaoxyde de phosphore est de 0,9% poids. Le rapport atomique [Co/(Co+Ni)] est égal à 0,65 et le rapport atomique phosphore sur Molybdène est égal à 0,4. Enfin, le rapport atomique (Ni+Co)/Mo est égal à 0,37.

Les caractéristiques du catalyseur D obtenu sont données dans le tableau 2.

Tableau 2 : Caractéristiques texturales du catalyseur D et du support A

|  | A | D |
|---|---|---|
| SBET (m2/g) | 210 | 195 |
| VPT (ml/g) | 0,95 | 0,92 |
| $dp_{Vméso/2}$ (nm) | 13 | 13 |
| $V_{50nm}$ (ml/g) | 0,25 | 0,25 |
| $V_{50nm}$ en % du VPT | 26 | 27 |

Exemple 5 : Préparation d'un catalyseur E non conforme à l'invention

Nous avons imprégné à sec le support A précédent dont les caractéristiques sont indiquées dans le tableau 1. La solution aqueuse de l'imprégnation contient des sels du molybdène et du nickel ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel est le nitrate de nickel $Ni(NO_3)_2.6H_2O$. Les teneurs de chacun de ces sels en solution ont été déterminées de manière à fixer la quantité désirée de chaque élément à la surface du support.

Après maturation à température ambiante dans une atmosphère saturée en eau, les extrudés du support imprégné sont séchés une nuit à 120°C puis calcinés à 500°C durant 2 heures sous air. La teneur en trioxyde de molybdène est de 6% poids, celle en oxyde de nickel est de 1,15% poids et celle du pentaoxyde de phosphore est de 1,2% poids. Le catalyseur E ne comporte pas de cobalt : Le rapport atomique [Co/(Co+Ni)] est égal à 0 et le rapport atomique phosphore sur Molybdène est égal à 0,4. Enfin, le rapport atomique (Ni+Co)/Mo est égal à 0,37.

Les caractéristiques du catalyseur E obtenu sont données dans le tableau 3.

Tableau 3 : Caractéristiques texturales du catalyseur E et du support A

|  | A | E |
|---|---|---|
| SBET (m2/g) | 210 | 190 |
| VPT (ml/g) | 0,95 | 0,9 |
| $dp_{Vméso/2}$ (nm) | 13 | 13,4 |
| $V_{50nm}$ (ml/g) | 0,25 | 0,25 |
| $V_{50nm}$ en % du VPT | 26 | 28 |

Exemple 6 : Préparation d'un catalyseur F (selon l'invention)

Nous avons imprégné à sec un support B sur lequel il n'y a pas de macroporosité et dont les caractéristiques sont indiquées dans le tableau 1. La solution aqueuse de l'imprégnation contient des sels du molybdène, du nickel et du cobalt ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel (cobalt) est le nitrate de nickel (cobalt) $Ni(NO_3)_2.6H_2O$ ($Co(NO_3)_{2.6}H_2O$). Les teneurs de chacun de ces sels en solution ont été déterminées de manière à fixer la quantité désirée de chaque élément à la surface du support.

Après maturation à température ambiante dans une atmosphère saturée en eau, les extrudés du support imprégné sont séchés une nuit à 120°C puis calcinés à 500°C durant 2 heures sous air. La teneur en trioxyde de molybdène est de 16% poids, celle en oxyde de nickel est de 1,05% poids, celle en oxyde de cobalt de 1,95% poids et celle du pentaoxyde de phosphore est de 3,2% poids. Le rapport atomique [Co/(Co+Ni)] est égal à 0,65 et le rapport atomique phosphore sur Molybdène est égal à 0,4. Enfin, le rapport atomique (Ni+Co)/Mo est égal à 0,36.

Les caractéristiques du catalyseur F obtenu sont données dans le tableau 4.

Tableau 4 : Caractéristiques texturales du catalyseur F et du support B

|  | B | F |
|---|---|---|
| SBET (m2/g) | 245 | 215 |
| VPT (ml/g) | 0,65 | 0,55 |
| $dp_{Vméso/2}$ (nm) | 11 | 12 |
| $V_{50nm}$(ml/g) | - | - |
| $V_{50nm}$ en % du VPT | 0 | 0 |

Exemple 7 : Préparation d'un catalyseur G (selon l'invention)

Nous avons imprégné à sec un support B sur lequel il n'y a pas de macroporosité et dont les caractéristiques sont indiquées dans le tableau 1. La solution aqueuse de l'imprégnation contient des sels du molybdène, du nickel et du cobalt ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel (cobalt) est le nitrate de nickel (cobalt) $Ni(NO_3)_2.6H_2O(Co(NO_3)_2.6H_2O)$. Les teneurs de chacun de ces sels en solution ont été déterminées de manière à fixer la quantité désirée de chaque élément à la surface du support.

Après maturation à température ambiante dans une atmosphère saturée en eau, les extrudés du support imprégné sont séchés une nuit à 120°C puis calcinés à 500°C durant 2 heures sous air. La teneur en trioxyde de molybdène est de 14% poids, celle en oxyde de nickel est de 0,9% poids, celle en oxyde de cobalt de 1,7% poids et celle du pentaoxyde de phosphore est de 2,8% poids. Le rapport atomique [Co/(Co+Ni)] est égal à 0,65 et le rapport atomique phosphore sur Molybdène est égal à 0,4. Enfin, le rapport atomique (Ni+Co)/Mo est égal à 0,36.

Les caractéristiques du catalyseur G obtenu sont données dans le tableau 5.

Tableau 5 : Caractéristiques texturales du catalyseur G et du support B

|  | B | G |
|---|---|---|
| SBET (m2/g) | 245 | 220 |
| VPT (ml/g) | 0,65 | 0,55 |
| $dp_{Vméso/2}$ (nm) | 11 | 12 |
| $V_{50nm}$(ml/g) | - | - |
| $V_{50nm}$ en % du VPT | 0 | 0 |

Exemple 8 : Préparation d'un catalyseur H non conforme à l'invention

Nous avons imprégné à sec ce même support B dont les caractéristiques sont indiquées dans le tableau 1. La solution aqueuse de l'imprégnation contient des sels du molybdène et du cobalt ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du cobalt est le nitrate de cobalt $Co(NO_3)_2.6H_2O$. Les teneurs de chacun de ces sels en solution ont été déterminées de manière à fixer la quantité désirée de chaque élément à la surface du support.

Après maturation à température ambiante dans une atmosphère saturée en eau, les extrudés du support imprégné sont séchés une nuit à 120°C puis calcinés à 500°C durant 2 heures sous air. La teneur en trioxyde de molybdène est de 16% poids, celle en oxyde de cobalt est de 3% poids et celle du pentaoxyde de phosphore est de 3,2% poids. Le catalyseur E ne comporte pas de nickel : Le rapport atomique [Co/(Co+Ni)] est égal à 1 et le rapport atomique phosphore sur Molybdène est égal à 0,4. Enfin, le rapport atomique (Ni+Co)/Mo est égal à 0,36.

Les caractéristiques du catalyseur H obtenu sont données dans le tableau 6.

Tableau 6 :

|  | B | H |
|---|---|---|
| SBET (m2/g) | 245 | 215 |
| VPT (ml/g) | 0,65 | 0,55 |
| $dp_{Vméso/2}$ (nm) | 11 | 12 |
| $V_{50nm}$(ml/g) | - | - |
| $V_{50nm}$ en % du VPT | 0 | 0 |

Exemple 9 : Tests d'hydroconversion de résidus pétroliers par les catalyseurs C, D, E, F, G, H

Les catalyseurs C, D, E, F, G, H décrits dans les exemples 1 à 4 ont été comparés en test d'hydrotraitement de résidus pétroliers dans le procédé selon l'invention. La charge est constituée d'un résidu atmosphérique (RA) d'origine Moyen Orient (Arabian Light). Ce résidu se caractérise par une viscosité élevée (45 mm$^2$/s), de fortes teneurs en carbone conradson (10,2% en poids) et asphaltènes (3,2% en poids) et une quantité élevée de nickel (10,6 ppm en poids), vanadium (41 ppm en poids) et soufre (3,38 % en poids). Les caractéristiques complètes de la charge sont reportées dans le tableau 7.
Les tests sont menés dans un procédé d'hydrotraitement selon l'invention comportant une étape d'HDM suivie d'une étape d'HDS, les deux étapes étant mises en oeuvre dans deux réacteurs tubulaires en lit fixe disposés en série. Le premier réacteur est chargé avec du catalyseur d'HDM (C, D ou E) et le second réacteur avec du catalyseur d'HDS (F, G ou H). Le premier réacteur est rempli avec 400 mL de catalyseur et le second avec 600 mL de catalyseur. L'écoulement des fluides (résidus pétroliers + recyclage d'hydrogène) est descendant dans le réacteur. Ce type d'unité est représentatif du fonctionnement des réacteurs de l'unité HYVAHL d'hydrotraitement de résidus en lit fixe.

Tableau 7 : Caractéristiques de la charge utilisée pour les essais

|  |  | RA Arabian Light |
|---|---|---|
| Densité 15/4 |  | 0,9712 |
| Viscosité à 100°C | mm$^2$/s | 45 |
| Soufre | % pds | 3,38 |
| Azote | ppm | 2257 |
| Nickel | ppm | 10,6 |
| Vanadium | ppm | 41,0 |
| Carbone aromatique | % | 24,8 |
| Carbone conradson | % pds | 10,2 |
| Asphaltènes C7 | % pds | 3,2 |
| SARA |  |  |
| Saturés | % pds | 28,1 |
| Aromatiques | % pds | 46,9 |
| Résines | % pds | 20,1 |
| Asphaltènes | % pds | 3,5 |
| Distillation simulée |  |  |
| PI | °C | 219 |
| 5% | °C | 299 |
| 10% | °C | 342 |
| 20% | °C | 409 |

(suite)

| Distillation simulée | | |
|---|---|---|
| 30% | °C | 463 |
| 40% | °C | 520 |
| 50% | °C | 576 |
| 80% | °C | 614 |
| DS : res disti | %pds | 57 |

Après une étape de sulfuration par circulation dans le réacteur d'une coupe gazole additionnée de DMDS à une température finale de 350°C, on opère l'unité avec le résidu pétrolier décrits ci-dessous dans les conditions opératoires du tableau 8.

Tableau 8 : Conditions opératoires mises en oeuvre

| Pression totale | 15 MPa |
|---|---|
| Température de test | 370°C |
| Vitesse spatiale horaire du résidu | 0,2 h$^{-1}$ |
| Débit d'hydrogène | 1000 std l. $_{H2}$/l. charge |

On injecte le RA Arabian Light, puis on monte à la température de l'essai. Après une période de stabilisation de 300 heures, les performances en hydrodésulfuration et en hydrodémétallation (HDM) sont relevées.

Trois systèmes catalytiques sont évalués :

Le premier est constitué du catalyseur C en haut du réacteur (en amont du sens de circulation des fluides), représentant 40 % du volume catalytique total et du complément en catalyseur F en aval.

Le second est constitué du catalyseur D en haut du réacteur (en amont du sens de circulation des fluides), représentant 40 % du volume catalytique total et du complément en catalyseur G en aval.

Le troisième est constitué du catalyseur E en haut du réacteur (en amont du sens de circulation des fluides), représentant 40 % du volume catalytique total et du complément en catalyseur H en aval.

Pour les trois systèmes catalytiques les performances observées après 300 heures sont les suivantes :

Tableau 4 : Performances et HDM obtenues

| Catalyseurs | HDS (% poids) | HDM (% poids) |
|---|---|---|
| Catalyseur C + Catalyseur F (40/60) | 88 | 83 |
| Catalyseur D + Catalyseur G 40/60 | 82 | 79 |
| Catalyseur E + Catalyseur H (40/60) | 81 | 76 |

Le taux d'HDS est défini de la façon suivante :

$$HDS\ (\%\ pds) = ((\%\ pds\ S)_{charge} - (\%\ pds\ S)_{recette})/(\%\ pds\ S)_{charge} \times 100$$

Le taux d'HDM est défini de la façon suivante :

$$HDM\ (\%\ pds) = ((ppm\ pds\ Ni{+}V)_{charge} - (ppm\ pds\ Ni{+}V)_{recette})/(ppm\ pds\ Ni{+}V)_{charge} \times 100$$

Il apparaît donc qu'une combinaison de catalyseurs de la présente invention conduit à la fois à une meilleure activité HDS, mais aussi à une meilleure activité HDM que des catalyseurs comparatifs issus de l'art antérieur qui présentent néanmoins la même teneur en molybdène. En effet, les taux de conversion HDS et HDM sont meilleurs en utilisant des formulations catalytiques de la présente invention qu'avec un enchaînement NiMo dans la section HDM et CoMo dans la section HDS, les catalyseurs contenant les mêmes teneurs en molybdène dans les deux situations.

D'autre part, l'invention permet d'obtenir des activités HDM et HDS aussi élevées qu'avec des catalyseurs de l'art antérieur, mais en minimisant la teneur en molybdène. L'Homme du métier pourra ainsi utiliser des catalyseurs moins chargés en métaux et ainsi moins coûteux.

**Revendications**

1. Système catalytique comprenant au moins deux catalyseurs dans lequel

   - le premier catalyseur comprend

      - une teneur en métal ou métaux du groupe VIB comprise entre 2 et 9 % poids de trioxyde du métal ou des métaux du groupe VIB par rapport à la masse totale du catalyseur, et
      - au moins deux métaux du groupe VIII dont l'un est le promoteur majoritaire appelé VIII-1 et l'autre est appelé co-promoteur VIII-2, la somme des teneurs en métaux du groupe VIII, est comprise entre 0,3 et 2 % en poids de l'oxyde des métaux du groupe VIII par rapport à la masse totale du catalyseur et

   - le deuxième catalyseur comprend

      - une teneur en métal ou métaux du groupe VIB strictement supérieure à 9 et inférieure à 17 % poids de trioxyde du métal ou des métaux du groupe VIB par rapport à la masse totale du catalyseur, et
      - au moins deux métaux du groupe VIII dont l'un est le promoteur majoritaire appelé VIII-1 et l'autre est appelé co-promoteur VIII-2, la somme des teneurs en métaux du groupe VIII, est strictement supérieure à 2 et inférieure à 5 % en poids de l'oxyde des métaux du groupe VIII par rapport à la masse totale du catalyseur,

   dans lesdits premier et deuxième catalyseurs le métal du groupe VIB étant le molybdène et les métaux du groupe VIII étant le nickel et le cobalt,
   dans lesdits premier et deuxième catalyseurs les éléments du groupe VIII étant présents dans les proportions définies par le rapport atomique [VIII-1/(VIII-1+VIII-2)], ledit rapport atomique étant compris entre 0,5 et 0,85, ledit rapport atomique étant identique pour lesdits premier et deuxième catalyseurs,
   dans lesdits premier et deuxième catalyseurs les quantités respectives de métal ou métaux du groupe VIB et de métaux du groupe VIII sont telles que le rapport atomique métaux du groupe VIII sur métal ou métaux du groupe VIB (VIII/VIB) est compris entre 0,3:1 à 0,7:1, ledit rapport atomique étant identique pour lesdits premier et deuxième catalyseurs.

2. Système catalytique selon la revendication 1 dans lequel lesdits premier et deuxième catalyseurs contiennent au moins un élément dopant choisi parmi le phosphore et le bore.

3. Système catalytique selon les revendications 1 ou 2 dans lequel le volume macroporeux dudit premier catalyseur est supérieur à 5 % du volume poreux total (VPT).

4. Système catalytique selon l'une des revendications 1 à 3 dans lequel le volume macroporeux dudit deuxième catalyseur est inférieur à 10 % du volume poreux total (VPT).

5. Procédé d'hydrotraitement de charges hydrocarbonées lourdes comprenant au moins une étape d'hydrodémetallation et au moins une étape d'hydrodésulfuration, et mettant en œuvre un système catalytique comprenant au moins deux catalyseurs dans lequel

   - le premier catalyseur comprend

      - une teneur en métal ou métaux du groupe VIB comprise entre 2 et 9 % poids de trioxyde du métal ou des métaux du groupe VIB par rapport à la masse totale du catalyseur, et
      - au moins deux métaux du groupe VIII dont l'un est le promoteur majoritaire appelé VIII-1 et l'autre est appelé co-promoteur VIII-2, la somme des teneurs en métaux du groupe VIII, est comprise entre 0,3 et 2 % en poids de l'oxyde des métaux du groupe VIII par rapport à la masse totale du catalyseur et

- le deuxième catalyseur comprend

- une teneur en métal ou métaux du groupe VIB strictement supérieure à 9 et inférieure à 17 % poids de trioxyde du métal ou des métaux du groupe VIB par rapport à la masse totale du catalyseur, et
- au moins deux métaux du groupe VIII dont l'un est le promoteur majoritaire appelé VIII-1 et l'autre est appelé co-promoteur VIII-2, la somme des teneurs en métaux du groupe VIII, est strictement supérieure à 2 et inférieure à 5 % en poids de l'oxyde des métaux du groupe VIII par rapport à la masse totale du catalyseur,

dans lesdits premier et deuxième catalyseurs le métal du groupe VIB étant le molybdène et les métaux du groupe VIII étant le nickel et le cobalt,

dans lesdits premier et deuxième catalyseurs les éléments du groupe VIII étant présents dans les proportions définies par le rapport atomique [VIII-1/(VIII-1+VIII-2)], ledit rapport atomique étant compris entre 0,5 et 0,85, ledit rapport atomique étant identique pour lesdits premier et deuxième catalyseurs,

dans lesdits premier et deuxième catalyseurs les quantités respectives de métal ou métaux du groupe VIB et de métaux du groupe VIII sont telles que le rapport atomique métaux du groupe VIII sur métal ou métaux du groupe VIB (VIII/VIB) est compris entre 0,3:1 à 0,7:1, ledit rapport atomique étant identique pour lesdits premier et deuxième catalyseurs.

6. Procédé selon la revendication 5 dans lequel lesdits premier et deuxième catalyseurs contiennent au moins un élément dopant choisi parmi le phosphore et le bore.

7. Procédé selon les revendications 5 ou 6 dans lequel le volume macroporeux dudit catalyseur destiné à être utilisé dans une section HDM est supérieur à 5 % du volume poreux total (VPT).

8. Procédé selon l'une des revendications 5 à 7 dans lequel le volume macroporeux dudit catalyseur destiné à être utilisé dans une section HDS est inférieur à 10 % du volume poreux total (VPT).

9. Procédé selon l'une des revendications 5 à 8 dans lequel les charges présentent plus de 1% en poids de molécules ayant un point d'ébullition supérieur à 500°C, une teneur en métaux Ni+V supérieure à 1 ppm poids, et une teneur en asphaltènes, précipité dans l'heptane, supérieure à 0,05 % en poids.

10. Procédé selon la revendication 9 dans lequel les charges lourdes sont mélangées avec du charbon sous forme de poudre, ces charges pouvant être des sous produits issus de la conversion du charbon et re-mélangées à du charbon frais.

11. Procédé selon l'une des revendications 5 à 10 dans lequel ledit procédé est mis en œuvre en lit fixe, à une température comprise entre 320°C et 450°C, sous une pression partielle en hydrogène comprise entre 3 MPa et 30 MPa, à une vitesse spatiale comprise entre 0,05 et 5 volume de charge par volume de catalyseur et par heure, et avec un rapport hydrogène gazeux sur charge liquide d'hydrocarbures compris entre 200 et 5000 normaux mètres cubes par mètres cubes.

12. Procédé selon l'une des revendications 5 à 10 dans lequel ledit procédé est mis en œuvre en lit bouillonnant, à une température comprise entre 320 et 450°C, sous une pression partielle d'hydrogène comprise entre 3 MPa et 30 MPa, à une vitesse spatiale comprise entre 0,1 et 10 volumes de charge par volume de catalyseur et par heure, et avec un rapport hydrogène gazeux sur charge liquide d'hydrocarbures compris entre 100 et 3000 normaux mètres cubes par mètres cubes.

**Patentansprüche**

1. Katalytisches System, umfassend mindestens zwei Katalysatoren, wobei:

- der erste Katalysator umfasst:
- einen Gehalt an Metall oder Metallen der Gruppe VIB zwischen 2 und 9 Gew.-% Trioxid des Metalls oder der Metalle der Gruppe VIB im Verhältnis zur Gesamtmasse des Katalysators, und

- mindestens zwei Metalle der Gruppe VIII, wovon das eine der majoritäre Promotor ist, der als VIII-1 bezeichnet wird, und das andere als Co-Promotor VIII-2 bezeichnet wird, wobei die Summe der Gehalte an Metallen der Gruppe VIII zwischen 0,3 und 2 Gew.-% des Oxids der Metalle der Gruppe VIII im Verhältnis zur Gesamtmasse des Katalysators liegt, und

- der zweite Katalysator umfasst:
- einen Gehalt an Metall oder Metallen der Gruppe VIB streng größer als 9 und kleiner als 17 Gew.-% Trioxid des Metalls oder der Metalle der Gruppe VIB im Verhältnis zur Gesamtmasse des Katalysators, und
- mindestens zwei Metalle der Gruppe VIII, wovon das eine der majoritäre Promotor ist, der als VIII-1 bezeichnet wird, und das andere als Co-Promotor VIII-2 bezeichnet wird, wobei die Summe der Gehalte an Metallen der Gruppe VIII streng größer als 2 und kleiner als 5 Gew.-% des Oxids der Metalle der Gruppe VIII im Verhältnis zur Gesamtmasse des Katalysators ist,

wobei in dem genannten ersten und zweiten Katalysator das Metall der Gruppe VIB Molybdän ist, und die Metalle der Gruppe VIII Nickel und Kobalt sind,

wobei in dem genannten ersten und zweiten Katalysator die Elemente der Gruppe VIII in Anteilen vorhanden sind, die durch das Atomverhältnis [VIII-1/(VIII-1+VIII-2)] definiert sind, wobei das genannte Atomverhältnis zwischen 0,5 und 0,85 liegt, wobei das genannte Atomverhältnis für den genannten ersten und zweiten Katalysator identisch ist,

wobei in dem genannten ersten und zweiten Katalysator die jeweiligen Mengen an Metall oder Metallen der Gruppe VIB und an Metallen der Gruppe VIII derart sind, dass das Atomverhältnis von Metallen der Gruppe VIII zu Metall oder Metallen der Gruppe VIB (VIII/VIB) zwischen 0,3:1 bis 0,7:1 liegt, wobei das genannte Atomverhältnis für den genannten ersten und zweiten Katalysator identisch ist.

2. Katalytisches System nach Anspruch 1, wobei der genannte erste und zweite Katalysator mindestens ein Dotierelement enthalten, das aus Phosphor und Bor ausgewählt ist.

3. Katalytisches System nach den Ansprüchen 1 oder 2, wobei das makroporöse Volumen des genannten ersten Katalysators größer ist als 5 % des porösen Gesamtvolumens (VPT).

4. Katalytisches System nach einem der Ansprüche 1 bis 3, wobei das makroporöse Volumen des genannten zweiten Katalysators kleiner ist als 10 % des porösen Gesamtvolumens (VPT).

5. Verfahren zur Hydrobehandlung von schweren Kohlenwasserstofffraktionen, umfassend mindestens einen Schritt der Hydrodemetallisierung und mindestens einen Schritt der Hydrodesulfurierung, und unter Verwendung eines katalytischen Systems, umfassend mindestens zwei Katalysatoren, wobei:

- der erste Katalysator umfasst:
- einen Gehalt an Metall oder Metallen der Gruppe VIB zwischen 2 und 9 Gew.-% Trioxid des Metalls oder der Metalle der Gruppe VIB im Verhältnis zur Gesamtmasse des Katalysators, und
- mindestens zwei Metalle der Gruppe VIII, wovon das eine der majoritäre Promotor ist, der als VIII-1 bezeichnet wird, und das andere als Co-Promotor VIII-2 bezeichnet wird, wobei die Summe der Gehalte an Metallen der Gruppe VIII zwischen 0,3 und 2 Gew.-% des Oxids der Metalle der Gruppe VIII im Verhältnis zur Gesamtmasse des Katalysators liegt, und
- der zweite Katalysator umfasst:
- einen Gehalt an Metall oder Metallen der Gruppe VIB streng größer als 9 und kleiner als 17 Gew.-% Trioxid des Metalls oder der Metalle der Gruppe VIB im Verhältnis zur Gesamtmasse des Katalysators, und
- mindestens zwei Metalle der Gruppe VIII, wovon das eine der majoritäre Promotor ist, der als VIII-1 bezeichnet wird, und das andere als Co-Promotor VIII-2 bezeichnet wird, wobei die Summe der Gehalte an Metallen der Gruppe VIII streng größer als 2 und kleiner als 5 Gew.-% des Oxids der Metalle der Gruppe VIII im Verhältnis zur Gesamtmasse des Katalysators ist,

wobei in dem genannten ersten und zweiten Katalysator das Metall der Gruppe VIB Molybdän ist, und die Metalle der Gruppe VIII Nickel und Kobalt sind,

wobei in dem genannten ersten und zweiten Katalysator die Elemente der Gruppe VIII in Anteilen vorhanden sind, die durch das Atomverhältnis [VIII-1/(VIII-1+VIII-2)] definiert sind, wobei das genannte Atomverhältnis zwischen 0,5 und 0,85 liegt, wobei das genannte Atomverhältnis für den genannten ersten und zweiten Katalysator identisch ist,

wobei in dem genannten ersten und zweiten Katalysator die jeweiligen Mengen an Metall oder Metallen der Gruppe VIB und an Metallen der Gruppe VIII derart sind, dass das Atomverhältnis von Metallen der Gruppe VIII zu Metall oder Metallen der Gruppe VIB (VIII/VIB) zwischen 0,3:1 bis 0,7:1 liegt, wobei das genannte Atomverhältnis für den genannten ersten und zweiten Katalysator identisch ist.

**6.** Verfahren nach Anspruch 5, wobei der genannte erste und zweite Katalysator mindestens ein Dotierelement enthalten, das aus Phosphor und Bor ausgewählt wird.

**7.** Verfahren nach den Ansprüchen 5 oder 6, wobei das makroporöse Volumen des genannten Katalysators, der dazu bestimmt ist, in einer HDM-Sektion verwendet zu werden, größer ist als 5 % des gesamten porösen Volumens (VPT).

**8.** Verfahren nach einem der Ansprüche 5 bis 7, wobei das makroporöse Volumen des genannten Katalysators, der dazu bestimmt ist, in einer HDS-Sektion verwendet zu werden, kleiner ist als 10 % des gesamten porösen Volumens (VPT).

**9.** Verfahren nach einem der Ansprüche 5 bis 8, wobei die Fraktionen mehr als 1 Gew.-% an Molekülen mit einem Siedepunkt größer als 500 °C, einen Gehalt an Metallen Ni+V größer als 1 ppm, bezogen auf das Gewicht, und einen Gehalt an Asphaltenen, gefällt aus Heptan, größer als 0,05 Gew.-% aufweisen.

**10.** Verfahren nach Anspruch 9, wobei die schweren Fraktionen mit Kohlenstoff in Pulverform gemischt werden, wobei diese Fraktionen Nebenprodukte sein können, die aus der Überführung von Kohlenstoff stammen und erneut mit frischem Kohlenstoff gemischt werden.

**11.** Verfahren nach einem der Ansprüche 5 bis 10, wobei das genannte Verfahren im Festbett durchgeführt wird, bei einer Temperatur zwischen 320 °C und 450 °C, unter einem Wasserstoffpartialdruck zwischen 3 MPa und 30 MPa, bei einer Raumgeschwindigkeit zwischen 0,05 und 5 Volumen an Fraktion pro Volumen an Katalysator und pro Stunde, und mit einem Verhältnis von gasförmigem Wasserstoff zu flüssiger Kohlenwasserstofffraktion zwischen 200 und 5000 Normkubikmetern pro Kubikmeter.

**12.** Verfahren nach einem der Ansprüche 5 bis 10, wobei das genannte Verfahren im Wallendbett durchgeführt wird, bei einer Temperatur zwischen 320 °C und 450 °C, unter einem Wasserstoffpartialdruck zwischen 3 MPa und 30 MPa, bei einer Raumgeschwindigkeit zwischen 0,1 und 10 Volumen an Fraktion pro Volumen an Katalysator und pro Stunde, und mit einem Verhältnis von gasförmigem Wasserstoff zu flüssiger Kohlenwasserstofffraktion zwischen 100 und 3000 Normkubikmetern pro Kubikmeter.

**Claims**

**1.** Catalytic system comprising at least two catalysts, in which

- the first catalyst comprises

- a content of metal(s) from group VIB of between 2% and 9% by weight of trioxide of the metal (s) from group VIB relative to the total mass of the catalyst, and
- at least two metals from group VIII, one of which is the major promoter known as VIII-1 and the other is known as the co-promoter VIII-2, the sum of the contents of metals from group VIII is between 0.3% and 2% by weight of oxide of the metals from group VIII relative to the total mass of the catalyst and

- the second catalyst comprises

- a content of metal(s) from group VIB strictly more than 9% and less than 17% by weight of trioxide of the metal(s) from group VIB relative to the total mass of the catalyst, and
- at least two metals from group VIII, one of which is the major promoter known as VIII-1 and the other is known as the co-promoter VIII-2, the sum of the contents of metals from group VIII is strictly more than 2% and less than 5% by weight of oxide of the metals from group VIII relative to the total mass of the catalyst,

in said first and second catalysts, the metal from group VIB being molybdenum and the metals from group VIII being nickel and cobalt,
in said first and second catalysts, the elements from group VIII being present in the proportions defined by the atomic ratio [VIII-1/(VIII-1+VIII-2)], said atomic ratio being between 0.5 and 0.85, said atomic ratio being identical for said first and second catalysts,

in said first and second catalysts, the respective amounts of metal (s) from group VIB and of metals from group VIII are such that the atomic ratio of metals from group VIII to metal (s) from group VIB (VIII/VIB) is between 0.3:1 and 0.7:1, said atomic ratio being identical for said first and second catalysts.

2. Catalytic system according to Claim 1, in which said first and second catalysts contain at least one doping element chosen from phosphorus and boron.

3. Catalytic system according to Claim 1 or 2, in which the macropore volume of said first catalyst is more than 5% of the total pore volume (TPV).

4. Catalytic system according to one of Claims 1 to 3, in which the macropore volume of said second catalyst is less than 10% of the total pore volume (TPV) .

5. Process for the hydrotreatment of heavy hydrocarbon feeds, comprising at least one step of hydrodemetallization and at least one step of hydrodesulfurization, using a catalytic system comprising at least two catalysts, in which

   - the first catalyst comprises

      - a content of metal(s) from group VIB of between 2% and 9% by weight of trioxide of the metal (s) from group VIB relative to the total mass of the catalyst, and
      - at least two metals from group VIII, one of which is the major promoter known as VIII-1 and the other is known as the co-promoter VIII-2, the sum of the contents of metals from group VIII is between 0.3% and 2% by weight of oxide of the metals from group VIII relative to the total mass of the catalyst and

   - the second catalyst comprises

      - a content of metal(s) from group VIB strictly more than 9% and less than 17% by weight of trioxide of the metal(s) from group VIB relative to the total mass of the catalyst, and
      - at least two metals from group VIII, one of which is the major promoter known as VIII-1 and the other is known as the co-promoter VIII-2, the sum of the contents of metals from group VIII is strictly more than 2% and less than 5% by weight of oxide of the metals from group VIII relative to the total mass of the catalyst,

   in said first and second catalysts, the metal from group VIB being molybdenum and the metals from group VIII being nickel and cobalt,
   in said first and second catalysts, the elements from group VIII being present in the proportions defined by the atomic ratio [VIII-1/(VIII-1+VIII-2)], said atomic ratio being between 0.5 and 0.85, said atomic ratio being identical for said first and second catalysts,
   in said first and second catalysts, the respective amounts of metal (s) from group VIB and of metals from group VIII are such that the atomic ratio of metals from group VIII to metal (s) from group VIB (VIII/VIB) is between 0.3:1 and 0.7:1, said atomic ratio being identical for said first and second catalysts.

6. Process according to Claim 5, in which said first and second catalysts contain at least one doping element chosen from phosphorus and boron.

7. Process according to Claim 5 or 6, in which the macropore volume of said catalyst intended to be used in an HDM section is more than 5% of the total pore volume (TPV).

8. Process according to one of Claims 5 to 7, in which the macropore volume of said catalyst intended to be used in an HDS section is less than 10% of the total pore volume (TPV).

9. Process according to one of Claims 5 to 8, in which the feeds have more than 1% by weight of molecules having a boiling point of more than 500°C, an Ni+V metals content of more than 1 ppm by weight, and a content of asphaltenes, precipitated from heptane, of more than 0.05% by weight.

10. Process according to Claim 9, in which the heavy feeds are mixed with coal in powder form, these feeds possibly being by-products derived from conversion of coal and re-mixed with fresh coal.

11. Process according to one of Claims 5 to 10, in which said process is performed in a fixed bed, at a temperature of between 320°C and 450°C, at a partial pressure of hydrogen of between 3 MPa and 30 MPa, at a space velocity of between 0.05 and 5 volumes of feed per volume of catalyst per hour, and with a ratio of gaseous hydrogen to liquid hydrocarbon feed of between 200 and 5000 normal cubic metres per cubic metre.

12. Process according to one of Claims 5 to 10, in which said process is performed in an ebullated bed, at a temperature of between 320°C and 450°C, at a partial pressure of hydrogen of between 3 MPa and 30 MPa, at a space velocity of between 0.1 and 10 volumes of feed per volume of catalyst per hour, and with a ratio of gaseous hydrogen to liquid hydrocarbon feed of between 100 and 3000 normal cubic metres per cubic metre.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5417846 A
- FR 2681871
- US 5221656 A
- US 5827421 A
- US 5622616 A
- US 5089463 A
- US 7119045 B
- US 6589908 B
- US 4818743 A

- US 6332976 B
- EP 1600491 A1
- US 20060060509 A
- EP 113297 A
- EP 113284 A
- FR 2867988
- EP 1392431 A
- FR 9613797

**Littérature non-brevet citée dans la description**

- **BRUNAUER - EMMET - TELLER.** *The journal of the American Chemical Society,* 1938, vol. 60, 309